# EUROPÄISCHE PATENTSCHRIFT

(11) **EP 0 956 249 B1**
(45) Veröffentlichungstag und Bekanntmachung des Hinweises auf die Patenterteilung: **21.03.2001**
(21) Anmeldenummer: 98900239.9
(22) Anmeldetag: 15.01.1998
(51) Int. Cl.: B65G 13/10

(54) **WEICHE FÜR EINE FÖRDERANLAGE**
POINTS FOR A CONVEYOR ARRANGEMENT
AIGUILLE POUR SYSTEME TRANSPORTEUR

(30) Priorität: 29.01.1997 AT 12797
(43) Veröffentlichungstag der Anmeldung: 17.11.1999
(73) Patentinhaber: Knapp Logistik Automation Gesellschaft MBH, 8075 Hart bei Graz (AT)
(72) Erfinder: WÜNSCHER, Eduard, A-8075 Hart bei Graz (AT); FREUDELSPERGER, Karl, A-8075 Hart bei Graz (AT)
(74) Vertreter: Weinzinger, Arnulf, Dipl.-Ing.
(86) Internationale Anmeldenummer: AT9800004
(87) Internationale Veröffentlichungsnummer: WO9833727

(56) Entgegenhaltungen:
- EP-A- 0 051 039
- EP-A- 0 311 699
- EP-A- 0 438 820
- NL-A- 7 903 710
- US-A- 1 460 539
- US-A- 3 912 062
- US-A- 4 399 675
- US-A- 5 333 722

## Beschreibung

Die Erfindung betrifft eine Weiche gemäß dem einleitenden Teil von Patentanspruch 1.

Eine derartige Weiche ist aus der US 1 460 539 A bekannt, wobei hier die zur Rollenlagerung vorgesehenen Bügel über Zahnradgetriebe um eine Welle verdreht werden können, welche ihrerseits zum Antrieb der Rollen über Kegelradgetriebe vorgesehen sind.

Weiters offenbart die US 5 333 722 A eine Weichenkonstruktion, bei der ebenfalls von vertikalen Achsen verschwenkbar gelagerte Rollen vorgesehen sind. Zur Verschwenkung der Rollen sind Querstangen vorgesehen, die mit Drehtischen mittels eines T-förmigen Keils gekuppelt sind. Die Drehtische tragen ihrerseits L-förmige Konsolen, an denen die Rollen einseitig, frei auskragend, gelagert sind. Die Rollen und die zugehörigen Einrichtungsteile liegen an der Oberseite der Weiche frei. Insofern gleicht diese Konstruktion der in der AT 294 693 B beschriebenen Weiche, bei der sämtliche Bauteile freiliegend von der Oberseite her zugänglich sind. Durch das Eindringen von Fremdkörpern, wie z.B. von Teilen von Verpackungen der Fördergüter oder von aus Behältern herausfallenden Stückgütern, kann es zur Blockierung der Antriebs- und Verstellelemente kommen. Außerdem besteht eine Verletzungsgefahr für das Bedienungspersonal, wenn es während des Betriebes an der Förderbahn bzw. der Weiche hantiert.

Aus der DE 39 43 185 A ist eine Lenkrolleneinheit bekannt, die in Förderbahnen für zu bewegende Gegenstände verwendbar ist. Hierbei enthält die Lenkrolleneinheit zwei auf einer geometrisch horizontalen Achse nebeneinanderliegende, nicht angetriebene Tragwalzen, die voneinander unabhängig drehbar in einem Nadellager einer kreisförmig ausgebildeten Dreheinheit gelagert sind. Diese Dreheinheit ist ihrerseits über Kugeln in einem ebenfalls kreisförmig ausgebildeten Gehäusebasisteil um eine lotrechte Achse drehbar gelagert. Die (waagrechte) geometrische Drehachse der Tragwalzen ist jedoch exzentrisch zur lotrechten Achse des Gehäusebasisteiles versetzt angeordnet, damit sich die Tragwalzen beim Verschieben bzw. Bewegen eines Gegenstandes auf der Lenkrolleneinheit automatisch in die Bewegungsrichtung dieses Gegenstandes ausrichten. Ein Walzenhalter oberhalb der Dreheinheit weist eine rechteckige Öffnung für den Durchtritt der Tragwalzen auf. Die Lenkrolleneinheit ist in eine Öffnung eines Förderbahnpaneels einsetzbar. Es handelt sich demnach grundsätzlich nicht um eine Weiche, die zum wahlweisen Ablenken von Fördergut von einer Förderbahn zu einer anderen Förderbahn dient.

Weiters ist aus der CH 416 458 A eine Weiche für Röllchenbahnförderer mit einem Verschwenkmechanismus für die Röllchen bekannt, der allerdings hinsichtlich der Mechanik ziemlich aufwendig ausgebildet ist, abgesehen davon, daß auch hier keine Sicherheit gegen das Eindringen von Fremdkörpern bzw. eine Verletzungsgefahr für Personen gegeben ist. Im einzelnen besteht der Verschwenkmechanismus zu diesem Zweck aus an der Einlaufbahn des Förderers angelenkten Schwenkstäben, welche Langlöcher aufweisen. In diese Langlöcher greifen Gleitzapfen ein, die an Schwenkhebeln befestigt sind, die an senkrechten Zapfen befestigt sind, an denen die Röllchen der Weiche gelagert sind. Die Schwenkstäbe sind an einer gemeinsamen Betätigungsstange angelenkt.

Aufgabe der Erfindung ist die Schaffung einer Weiche der eingangs genannten Art, bei der nicht nur eine hohe Sicherheit des Bedienungspersonals gegen Verletzungen sowie gegen Blockierung der Förderbahn durch Fremdkörper gewährleistet ist, sondern auch eine baulich einfache Verschwenkung der Rollen ermöglicht ist.

Diese Aufgabe wird erfindungsgemäß durch die in Anspruch 1 definierten Merkmale gelöst. Vorteilhafte Ausführungsformen und Weiterbildungen sind in den Unteransprüchen angegeben. Durch die erfindungsgemäße Ausbildung wird der vorstehend angeführten Zielsetzung gut entsprochen, wobei trotz der baulich einfachen Schwenkbarkeit der Rollen, die die Umlenkung des Fördergutes ermöglichen, das Eindringen von Fremdkörpern in die Weichenkonstruktion verhindert und die beschriebene Verletzungsgefahr vermieden wird. Damit können auch strenge Sicherheitsbestimmungen für Förderbahnen eingehalten werden.

Gemäß einer bevorzugten, konstruktiv einfachen und zweckmäßigen Ausführungsform der Erfindung ist vorgesehen, daß die Ausnehmungen in den Abdeckscheiben allgemein rechteckförmig sind und die Rollen mit geringem Spiel z.B. mit einem Spalt von 0,5 mm bis 4 mm, beispielsweise ca. 1 mm, aufnehmen.

Eine baulich einfache Anordnung bzw. Ausbildung der Abdeckscheiben wird weiters erhalten, wenn die Abdeckscheiben mit einem axialen Spiel, z.B. von 0,5 mm bis 4 mm, beispielsweise ca. 1 mm, unterhalb der Ausnehmungen der Abdeckplatte angeordnet sind. Des weiteren ist es aus Platzgründen von Vorteil, wenn die Ausnehmungen der Abdeckplatte ebenso wie die Abdeckscheiben allgemein kreisförmig ausgebildet sind. In diesem Zusammenhang ist es aus Sicherheitsgründen auch günstig, wenn der Durchmesser der Abdeckscheiben etwas größer als der Durchmesser der Ausnehmungen ist.

Gemäß einer weiteren bevorzugten Ausführungsform der Erfindung ist vorgesehen, daß die Oberseiten der Abdeckscheiben und der Abdeckplatte in gleicher Höhe verlaufen. Eine derartige bündige, d.h. niveaugleiche Anordnung aller Abdeckelemente kommt den Sicherheitsbestrebungen im besonderen Maße entgegen. Auch wird der zur Verfügung stehende geringe Raum bzw. Bauhöhe innerhalb des Weichenaufbaus in optimaler Weise ausgenützt. Eine hinsichtlich Sicherheit besonders vorteilhafte Lagerung für die Rollen ist dadurch gekennzeichnet, daß die Abdeckscheiben mit einem radialen Spiel von 0,5 mm bis 4 mm, beispielsweise ca.1 mm, in die kreisförmig ausgebildete Ausnehmung der Abdeckplatte eingesetzt sind.

Somit ist bei den vorgenannten Anordnungen bzw. Ausbildungen der Abdeckscheiben mit großer Sicherheit gewährleistet, daß zwischen den sich drehenden Rollen und den Abdeckscheiben einerseits, sowie zwischen den schwenkbaren Abdeckscheiben und den Ausnehmungen der feststehenden Abdeckplatte andererseits keine Körper eindringen können, die größer als der festgelegte minimale Spalt zwischen den genannten bewegten und feststehenden Bauteilen der Weiche sind.

Dadurch, daß die Rollen an den Schenkeln von U-förmigen Bügeln gelagert sind, wobei die Abdeckscheiben an den, vorzugsweise nach außen abgewinkelten, oberen Enden der Schenkel befestigt sind, können die Abdeckplatten auf einfache Weise so montiert werden, daß sie zusammen mit den Rollen verschwenkbar sind, und die U-förmigen Bügel können samt den Rollen nach Abnehmen der Abdeckplatte rasch und einfach ohne Zuhilfenahme von Werkzeugen bei Bedarf ausgewechselt werden. Mit der Schubstange, die über einen in ein Langloch eingreifenden Stift an den U-förmigen Bügeln an deren Basis angreift, wird in vorteilhafter Weise durch eine geringe Anzahl von Bauteilen eine gleichzeitige Verschwenkung der Rollen ermöglicht, wobei auch ein geringer Verschleiß der Bauteile bei dieser Konstruktion resultiert. Dabei ist es im Hinblick auf einen effektiven Antrieb mit robuster Steuerungsmöglichkeit auch vorteilhaft, wenn der Schubstange als Antrieb ein pneumatischer Zylinder zugeordnet ist.

Auch kann mit Vorteil vorgesehen werden, daß zur Verschwenkung der Rollen um die Achse des Lagerzapfens die Basis des U-förmigen Bügels ein seitlich außen liegendes, gegebenenfalls kreisbogenförmig ausgebildetes Langloch aufweist, in welches ein Stift eingreift, der an der Schubstange befestigt ist.

Um die Montage der Weiche bzw. Servicearbeiten an der Weiche rasch und einfach durchführen zu können ist es auch günstig, wenn die Abdeckplatte mittels Schnappverbindungen, beispielsweise in Form von Kugelschnappern, am Rahmen der Weiche fixierbar bzw. fixiert ist.

Zum Antreiben der Rollen ist es besonders günstig, wenn der Rahmen der Weiche durch U-förmige Querträger mit jeweils zwei an deren Enden übereinanderliegend angeordneten C-förmigen Profilschienen gebildet ist und die Lager für die Rollen an den Querträgern befestigt sind. Es ergibt sich hierdurch in vorteilhafter Weise die Möglichkeit, die Weiche in Modulbauweise herzustellen und rasch in neue aufzustellende oder bereits bestehende Förderbahnen einzubauen. Hierbei ist es zur Erzielung eines einfachen Rollenantriebs auch von Vorteil, wenn die Rollen eine mittige Umfangsnut aufweisen, in welche ein Antriebsriemen eingreift, der um eine unterhalb der Rollen gelagerte Antriebsrolle geführt ist. Auch ist es hier günstig, wenn jede Antriebsrolle sowie gegebenenfalls im Abschnitt der Weiche liegende Tragrollen von einem gemeinsamen Antriebsriemen angetrieben sind. Auf diese Weise ist nur ein einziger Antriebsmotor für den gemeinsamen Antriebsriemen erforderlich.

Um den Reibungsschluß zwischen dem Fördergut bzw. den Behältern zu erhöhen, ist es besonders zweckmäßig, wenn die Rollen beidseits der mittigen Umfangsnut mit weiteren Umfangsnuten zur Aufnahme von O-Ringen aus Gummi versehen sind.

Zur zusätzlichen Erhöhung der Sicherheit gegen das Eindringen von Fremdkörpern im Bereich der Rollen ist es auch vorteilhaft, wenn die Kontur der Ausnehmungen der Abdeckscheiben an die Kontur der Rollen angepaßt ist.

Es hat sich auch als günstig erwiesen, wenn sich die Abdeckplatte über einen Abschnitt einer weiteren parallel zur Förderbahn liegenden ableitenden Förderbahn erstreckt, und die beispielsweise in Paaren angeordneten, Rollen in Richtung zur ableitenden Förderbahn versetzt angeordnet sind. Dadurch können die Fördergüter bzw. Behälter wahlweise entweder in Hauptförderrichtung oder von dieser in eine dazu parallel verlaufende Nebenförderrichtung weitertransportiert werden.

Bei einer zusätzlichen vorteilhaften Ausgestaltung dieser Ausführungsform der Weiche ist vorgesehen, daß die vorderen Rollen verschwenkbar und die hinteren Rollen fix einstellbar sind. Diese fixe Einstellung kann bei Montage der Förderanlage in Entsprechung zur Ausrichtung der ableitenden Förderbahn vorgenommen werden, wobei später keine Verstellungen mehr notwendig sind, so daß eine bauliche Vereinfachung ermöglicht wird.

Um die Fördergüter bzw. Behälter wahlweise von zwei zubringenden Förderbahnen jeweils geradeaus oder auskreuzend weiterleiten zu können, ist es auch von Vorteil, wenn sich die Abdeckplatte über einen Abschnitt einer weiteren, zur Förderbahn parallelen zubringenden Förderbahn erstreckt, die sich zur ableitenden Förderbahn fortsetzt, wobei weitere versetzt angeordnete Rollen angeordnet sind, die verschwenkbar sind. Von Vorteil ist es hierbei auch, wenn, die letzten einander parallelgeschalteten Rollen fix einstellbar sind, da sich dadurch der Aufwand an Bauteilen verringert.

Die Erfindung wird nachfolgend anhand von in der Zeichnung dargestellten Ausführungsbeispielen, auf die sie jedoch nicht beschränkt werden soll, noch weiter erläutert.

Es zeigen:
Fig.1 eine Rollen-Förderbahn mit Weiche in Draufsicht;
Fig.2 die Rollen-Förderbahn nach Fig.1 im Schnitt nach den Linien II-II in Fig.1;
Fig.3 einen Schnitt nach der Linie III-III in Fig.1 in vergrößerter Darstellung;
Fig.4 eine Rollen-Abdeckung teilweise im Schnitt;
Fig.5 eine weitere Rollen-Abdeckung teilweise im Schnitt;
Fig.6 eine Draufsicht auf die Rollen-Abdeckung nach Fig.5; und
Fig.7 ein weiteres Ausführungsbeispiel einer Rollen-Förderbahn mit Weiche in Draufsicht.

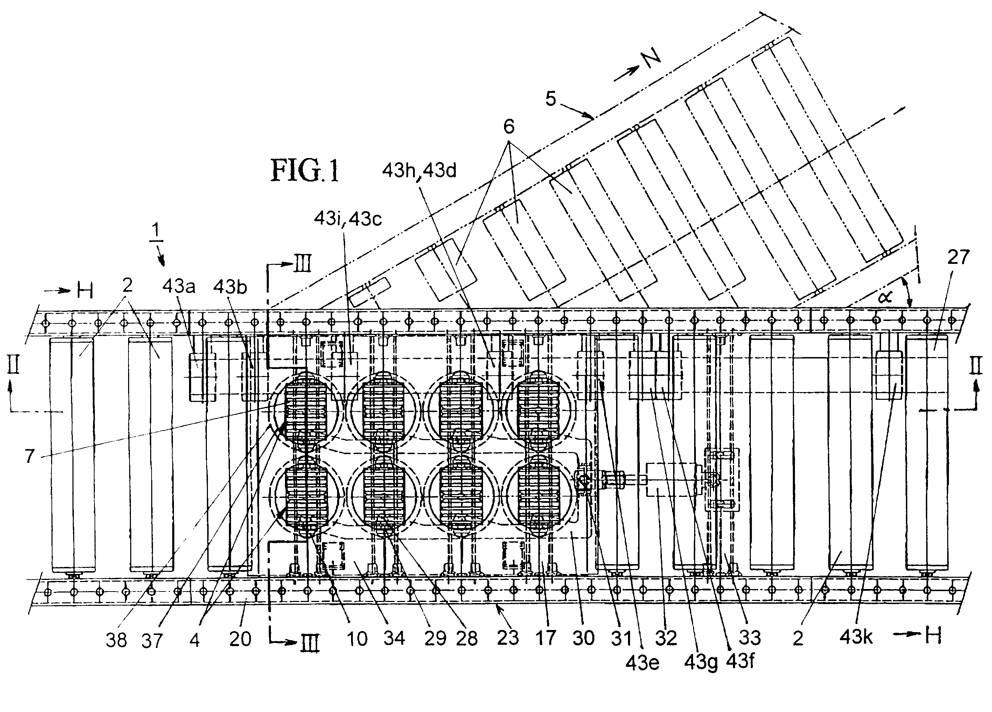

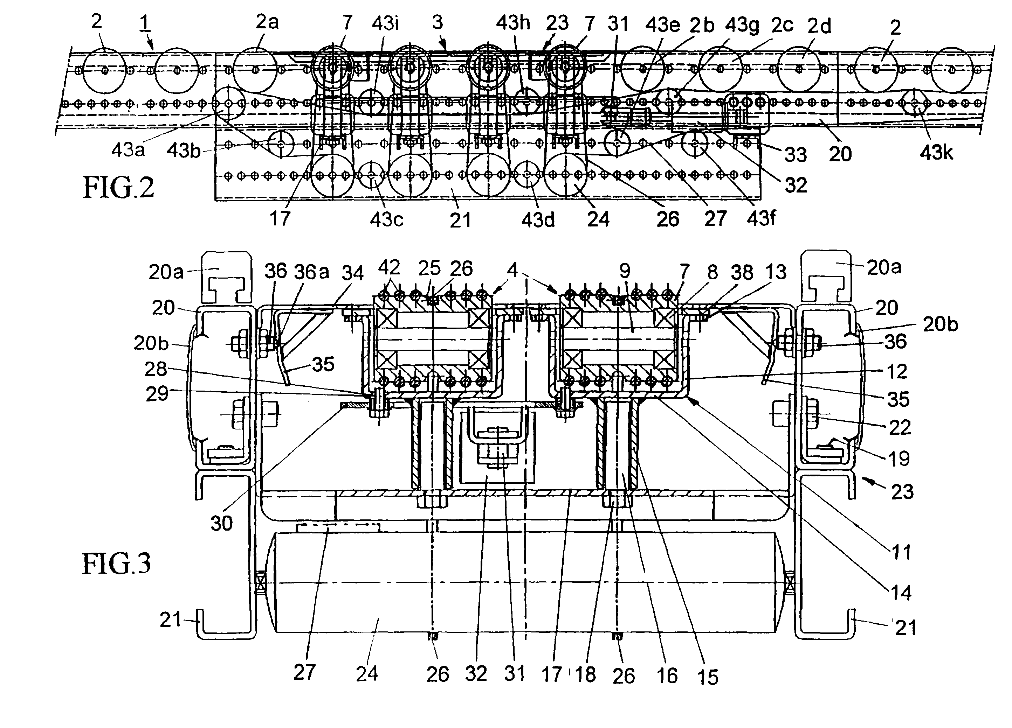

In Fig.1 und 2 bezeichnet 1 allgemein eine Rollen-Förderbahn mit angetriebenen Tragrollen 2, wobei eine Weiche 3 mit vier verstellbaren und angetriebenen Rollenpaaren 4 angeordnet ist. Von der Förderbahn 1 zweigt im Bereich der Weiche 3 nach links eine weitere Rollenförderbahn 5 mit Tragrollen 6 ab, welche eine Nebenförderrichtung N definiert, die mit der Hauptförderrichtung H z.B. einen Winkel a von 30° bis 60° einschließt. Die Tragrollen 6 können entweder angetrieben oder aber freilaufend sein, wenn die Rollen-Förderbahn 1 bzw. 5 als Gefällerollbahn ausgebildet ist.

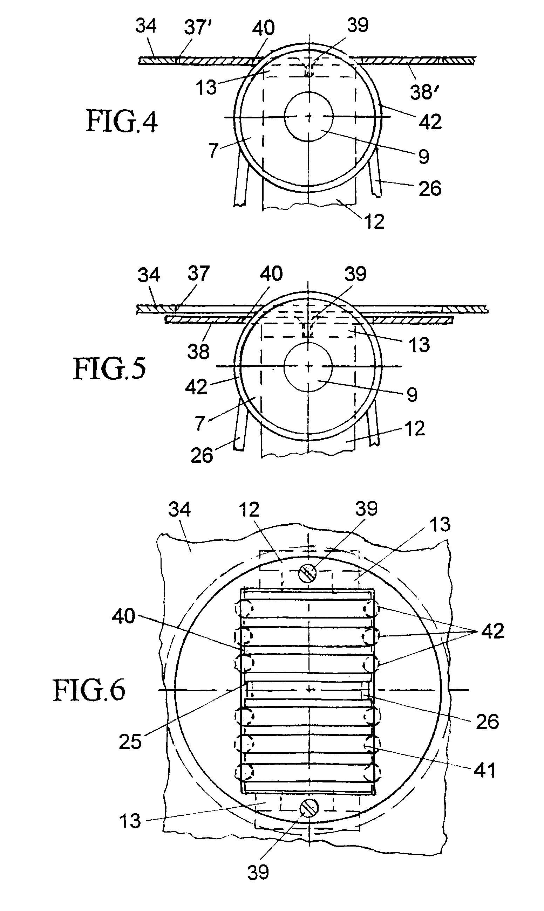

Die Rollen 7 der Weichen-Rollenpaare 4 sind, wie insbesondere aus Fig.3 ersichtlich ist, jeweils über Kugellager 8 auf einer Welle 9 gelagert, deren Enden in einem Lagerkörper 10 gehalten sind. Der Lagerkörper 10 ist als U-förmiger Bügel 11 ausgebildet, an dessen Schenkeln 12 die Welle 9 angebracht ist. Die Enden 13 der Schenkel 12 sind nach außen abgewinkelt und dienen als Befestigungsteil, wie weiter unten erläutert wird. An der Basis 14 des U-förmigen Bügels 11 ist zentrisch eine Lagerbuchse 15 angeschweißt, die auf einem Lagerzapfen 16 aufgesteckt ist, der an einem im Querschnitt U-förmigen Querträger 17 mittels einer Schraube 18 befestigt ist.

Eine seitliche Abdeckung der Weiche 3 wird jeweils durch zwei übereinander angeordnete und miteinander mittels Nieten 19 verbundene C-förmige Profilschienen 20, 21 gebildet, wobei der Basisteil oder Steg des U-förmigen Querträgers 17 an den Enden nach oben abgewinkelt und mittels Schrauben 22 mit der oberen Profilschiene 20 verbunden ist, um einen Rahmen 23 in der Art eines Leiterrahmens für die Weiche 3 zu bilden. Auf jeder oberen Profilschiene 20 ist eine seitliche Führungsschiene 20a für das Fördergut bzw. die Behälter angebracht; die freie Öffnung der Profilschiene 20 ist durch eine z.B. aufgeschnappte Abdeckung 20b abgeschlossen. Zwischen den beiden unteren C-förmigen Profilschienen 21 ist eine Antriebsrolle 24 angeordnet bzw. in den Profilschienen 21 drehbar gelagert. Jede Rolle 7 weist eine mittige Umfangsnut 25 auf. Ein Antriebsriemen 26 umgreift die Antriebsrolle 24 und die Rolle 7 in deren Umfangsnut 24 (s. außer Fig.3 auch Fig.2), um die Rolle 7 von der Antriebsrolle 24 her anzutreiben. Ein in Fig.3 mit strichpunktierter Linie dargestellter Antriebsriemen 27 (s. auch Fig.2) treibt die jeweiligen Antriebsrollen 24 und damit indirekt auch die zugehörigen Rollen 7 an.

Die im Bereich der Weiche 3 angeordneten Tragrollen 2a bis 2d werden, wie aus Fig.2 ersichtlich ist, ebenfalls vom Antriebsriemen 27 angetrieben, der über mehrere Umlenk- bzw. Spannrollen 43a bis 43i und weiteren Umlenk- bzw. Spannrollen außerhalb der Weiche 3 - von denen noch eine Umlenk- bzw. Spannrolle 43k dargestellt ist - geführt und von einem Antriebsmotor (nicht dargestellt) angetrieben ist.

Zur Verschwenkung der Rollenpaare 4 bzw. der Rollen 7 um die vertikal ausgerichtete Achse des Lagerzapfens 16 weist die Basis (der Steg) 14 jedes U-förmigen Bügels 11 seitlich außen ein Langloch 28 auf (s. Fig.1 und 3), in welches ein stiftförmig ausgebildetes Ende einer Schraube 29 eingreift, die an einem der Arme einer zweiarmigen, d.h. gabelförmigen Schubstange 30 angeschraubt ist. (Selbstverständlich könnte auch in den Gabelarmen der Schubstange 30 ein Langloch vorgesehen sein, und die Schrauben 29 könnten in Gewindebohrungen der Bügel 11 fest eingeschraubt sein.) Die Schubstange 30 ist über ein Gelenk 31 mit der Kolbenstange eines pneumatischen Zylinders 32 gekoppelt, der an einem Querträger 33 des Rahmens 23 befestigt ist (s. auch Fig.2). Durch Betätigung des Zylinders 32 können somit in der Ausführungsform gemäß Fig.1 bis 3 sämtliche Rollenpaare 4 bzw. Rollen 7 gleichzeitig aus der Hauptförderrichtung H in die Nebenförderrichtung N (und zurück) verschwenkt werden, so daß ein von links in Fig.1 auf der Rollen-Förderbahn 1 ankommendes Fördergut, z.B. ein Sammel- oder Transportbehälter, auf die Rollen-Förderbahn 5 umgelenkt wird.

Damit keine Fremdkörper in den Bereich der Bauteile der Weiche 3 eindringen können und das Bedienungspersonal beim Hantieren im Bereich der Weiche 3 vor Verletzungen durch die bewegten bzw. sich drehenden Bauteile geschützt wird, ist an der Oberseite der Weiche 3 eine Abdeckung vorgesehen. Diese Abdekkung wird hauptsächlich durch eine stationäre Abdeckplatte 34 gebildet, die an ihren seitlichen Enden nach unten abgewinkelt ist und an der Oberseite bündig mit den oberen Flanschen der oberen C-förmigen Profilschienen 20 abschließt. An der Unterseite der Abdeckplatte 34 sind vor deren abgewinkelten Enden Winkellaschen 35 angeschweißt, welche durch in der oberen C-förmigen Profilschiene 20 verstell- und fixierbar angeordnete Schrauben 36 gehalten werden; diese Schrauben 36 sind an ihrer Spitze als federnde Kugelschnapper ausgebildet, die in eine Vertiefung oder Bohrung in den Winkellaschen 35 einrasten, um eine Schnappverbindung zu bilden, wodurch die Abdeckplatte 34 einfach und rasch ein- und ausgebaut werden kann. Die Abdeckplatte 34 weist im Bereich der Rollen 7 in Draufsicht kreisförmige Ausnehmungen 37 auf. Unterhalb dieser Ausnehmungen 37 ist in einem Abstand von z.B. 0,5 mm bis 4 mm, vorzugsweise ca. 1 mm, jeweils eine in Draufsicht beispielsweise ebenfalls kreisförmige Abdeckscheibe 38 vorgesehen, deren Durchmesser um ca. 10 % bis 20 % größer als der Durchmesser der Ausnehmungen 37 ist, wobei jede Abdeckscheibe 38, wie insbesondere aus Fig.5 und 6 ersichtlich ist, an den nach außen abgewinkelten Enden 13 der Schenkel 12 des U-förmigen Bügels 11 mit Senkschrauben 39 befestigt ist. Jede Abdeckscheibe 38 ist mittig mit einer rechteckförmigen Ausnehmung 40 versehen, um den Durchtritt der zugehörigen Rolle 7 zu ermöglichen; die Rollen 7 sind, wie insbesondere aus Fig.6 ersichtlich ist, beidseits der mittigen Umfangsnut 25 mit jeweils drei weiteren Umfangsnuten 41 zur Aufnahme von O-Ringen 42 aus Gummi versehen, um den Reibungsschluß zwischen dem Fördergut bzw. den Behältern und den Rollen 7 zu erhöhen. Die mittige Nut 25 ist hierbei tiefer als die Nuten 41 ausgebildet, um zu gewährleisten, daß das Fördergut bzw. der jeweilige Behälter nur auf den O-Ringen 42 aufliegt.

Bei der modifizierten Ausführungform nach Fig.4 schließt die Abdeckscheibe 38' niveaugleich an die Abdeckplatte 34 an, und sie ist mit einem geringen radialen Spiel von 0,5 mm bis 4 mm, vorzugsweise ca. 1 mm, in die kreisförmige Ausnehmung 37 der Abdeckplatte 34 eingesetzt.

Das Niveau der Oberseiten der Rollen 7 bzw. von deren Ringen 42 ist um ca. 2 mm höher als das Niveau der Oberseiten der Tragrollen 2, um Unebenheiten an der Unterseite des Fördergutes bzw. der Behälter auszugleichen. Bei den Ausführungsformen gemäß Fig.4 bis 6 ist auch vorgesehen, daß die Kontur der Ausnehmungen 40 der Abdeckscheiben 38 bzw. 38' an die Kontur der Rollen 7 (insbesondere im Bereich der O-Ringe 42 und des Antriebsriemens 26) angepaßt ist, wobei ein Randspiel von 0,5 mm bis 4 mm, vorzugsweise ca. 1 mm, vorgesehen ist.

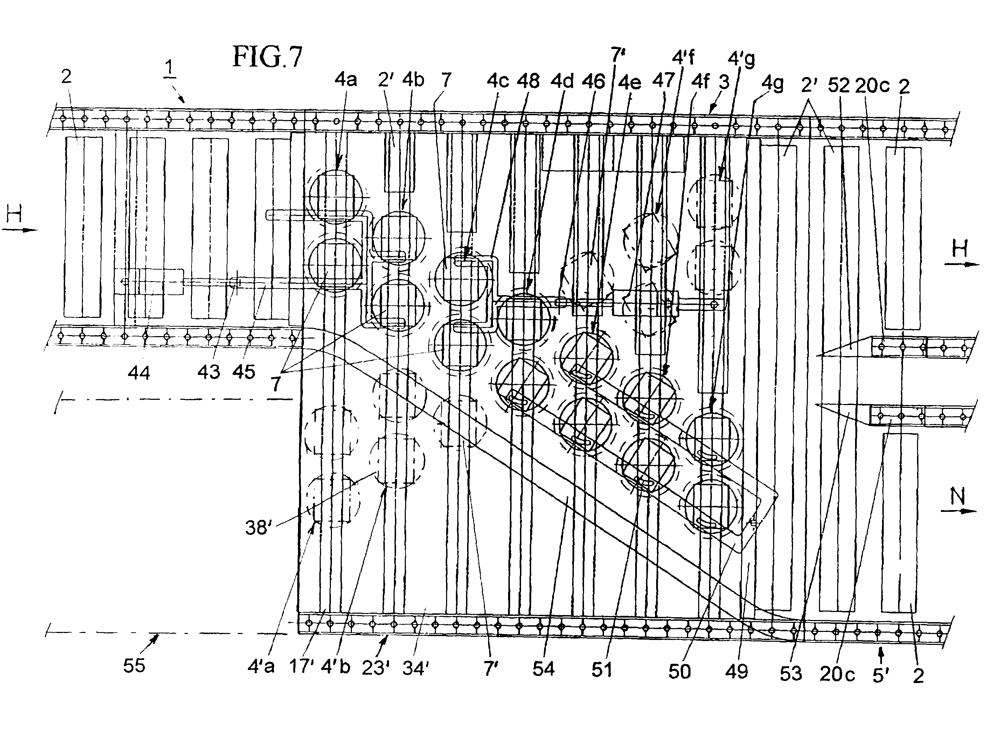

Bei der in Fig.7 gezeigten Rollen-Förderbahn 1 setzt sich die weitere, d.h. abzweigende Rollen-Förderbahn 5' nach der Weiche 3 parallel neben der (Haupt-)Förderbahn 1 fort, d.h. das Fördergut bzw. die Behälter können von der Hauptförderrichtung H in die dazu parallele Nebenförderrichtung umgeleitet werden. Zu diesem Zwecke ist die Weiche 3 mit sieben Rollenpaaren 4a bis 4g ausgestattet, die zur Nebenförderrichtung N hin führend versetzt angeordnet sind, und deren Rollen 7 in drei Gruppen unterteilt sind. Die erste Gruppe besteht aus zwei Rollenpaaren 4a und 4b, die über eine dreiarmige, über ein Gelenk 43 mit der Kolbenstange eines pneumatischen Zylinders 44 verbundene Schubstange 45 verschwenkbar angeordnet sind, und zwar in der Art, wie zuvor anhand der Fig.1 und 3 erläutert wurde, so daß sich eine neuerliche Beschreibung erübrigen kann. Die zweite Rollengruppe besteht aus einem Rollenpaar 4c und einer Rolle 7 des nachfolgenden Rollenpaares 4d; diese Rollen sind in entsprechender Weise über eine zweiarmige, über ein Gelenk 46 mit der Kolbenstange eines pneumatischen Zylinders 47 verbundene Schubstange 48 verschwenkbar. Die dritte Gruppe besteht aus der zweiten Rolle 7 des zuvor genannten Rollenpaares 4d und den drei daran anschließenden Rollenpaaren 4e bis 4g, die an einer zweiarmigen, an einem Querträger 49 starr befestigten Stange 50 individuell fixierbar sind, und zwar mittels Stellschrauben (nicht dargestellt), die in kreisbogenförmigen Langlöchern 51 der Stange 50 eingreifen. Hierbei sind die zweite. Rolle 7 des Rollenpaares 4d und die Rollen 7 der zwei nachfolgenden Rollenpaare 4e und 4f dieser dritten Gruppe schräg zur weiteren Rollen-Förderbahn 5' führend eingestellt, während die Rollen 7 des letzten Rollenpaares 4g bereits in die endgültig Förderrichtung führend eingestellt sind. Diese Einstellung der dritten Gruppe von Rollen kann deshalb mit einem einfacheren Feststell-Mechanismus erfolgen, da sie in der Regel nur einmal, bei Montage der Förderanlage, vorzunehmen ist und dann so bleiben kann, solang nicht die Anordnung der weiteren Förderbahn 5' relativ zur Haupt-Förderbahn 1 geändert wird.

Hinter dem letzten Rollenpaar 4g erstrecken sich zwei Tragrollen 2' quer sowohl über die Hauptförderbahn 1 als auch über die weitere Rollen-Förderbahn 5'; die übrigen, in Hauptförderrichtung H ausgerichteten Tragrollen 2' sind im Bereich der Weiche 3 in abgestuften Längen ausgebildet. Ab der zweiten Tragrolle 2', nach der Weiche 3, sind die beiden Rollen-Förderbahnen 1 und 5' endgültig getrennte Bahnen mit gesonderten Tragrollen 2, wobei vor den beiden mittig liegenden oberen C-Profilschienen 20 (s. Fig.3) der beiden Rollen-Förderbahnen 1, 5' Führungskeile 20c angebracht sind, um das Fördergut bzw. die Behälter in die jeweilige Bahn 1 bzw. 5' einzulenken. Zusätzlich ist auch eine Führungsschiene 54 vorgesehen, die parallel zur allgemeinen Anordnung der schräg versetzten Rollenpaare 4a bis 4g, somit von der ankommenden Förderbahn 1 schräg zur weiteren Förderbahn 5' verläuft. Die Abdeckplatte 34' der Weiche 3 erstreckt sich hierbei über die Rollenpaare 4a bis 4g. Weiters sind wiederum den einzelnen Rollen 7 Abdeckscheiben 38 bzw. 38' in der Art, wie vorstehend insbesondere anhand der Fig.4 bis 6 beschrieben, zu Ergänzung bzw. Komplettierung der Schutz-Abdekkung im Weichenbereich zugeordnet.

Bei der in Fig.1 gezeigten Anordnung der Weiche 3 besteht weiters die Möglichkeit, eine zusätzliche, nach rechts abzweigende, im Prinzip entsprechend der Förderbahn 5 ausgebildete Rollen-Förderbahn anzuordnen, um das Fördergut bzw. die Behälter wahlweise nach links oder nach rechts abzuzweigen oder aber geradeaus weiterlaufen zu lassen. Der erwähnte Abzweigwinkel beträgt dann insgesamt ±30° bis ±60°. Wesentlich hierfür ist nur, daß die gezeigten Rollen 7 bzw. Rollenpaare 4 aus der dargestellten neutralen Stellung in beide Richtungen, im Uhrzeigersinn wie im Gegenuhrzeigersinn, verschwenkt werden können. Denkbar wäre es in weiterer Folge auch, in diesem Fall die abgebende mittlere Haupt-Förderbahn wegzulassen, so daß eine exakte Y-Aufteilung erhalten wird.

Auch bei der in Fig.7 gezeigten Anordnung der Weiche 3 kann eine zusätzliche Ausbildung dahingehend vorgenommen werden, daß parallel neben der zubringenden Rollen-Förderbahn 1 eine weitere zubringende Rollen-Förderbahn 55 angeordnet ist, wie in Fig.7 mit strichpunktierter Linie dargestellt ist. Die Weiche 3 wird dann durch z.B. vier zusätzliche verstellbare und stufenweise versetzte Rollenpaare 4'a, 4'b, 4'f, 4'g sowie zwei Rollen 7' ergänzt, die ebenfalls mit strichpunktierten Linien dargestellt sind, wobei dann auch die Rollenpaare 4d bis 4g verstellbar ausgebildet sind und die Rollenpaare 4'a, 4'b, 4'f, 4'g zusammen mit den Rollenpaaren 4a bis 4c und 4e bis 4g vor und nach dem mittigen Rollenpaar in Kreuzform angeordnet sind, so daß außer dem Transport auf den Rollenbahnen 1 bzw. 55-5' in der jeweiligen Hauptförderrichtung auch eine wahlweise Auskreuzung des Fördergutes bzw. der Behälter von den beiden zubringenden Bereichen der Rollen-Förderbahnen 1, 55 zu dem jeweils anderen abgehenden Bereich der Rollen-Förderbahn 5' bzw. 1 ermöglicht wird, und zwar auf einer "idealen" S-förmigen Bahn, wodurch ein ruckweises Verstellen des Fördergutes bzw. der Behälter in Förderrichtung vermieden werden kann. Die beiden letzten, einander gegenüberliegenden Rollenpaare 4g, 4g' können auch fix einstellbar ausgebildet sein, um das Fördergut jeweils bereits in die Hauptförderrichtung zu leiten.

Die beschriebenen Weichenanordnungen können selbstverständlich außer für Rollen-Förderbahnen auch bei Förderbändern oder Kettenförderern eingesetzt werden. Außerdem können anstelle von pneumatischen Zylindern auch Elektromagnete oder Elektromotoren, insbesondere Stellmotoren, als Verschwenkantrieb für die Rollen 7 bzw. 7' vorgesehen sein. Anstatt der Antriebsriemen 26, 27 können selbstverständlich auch andere bekannte Transmissionen, wie insbesondere Antriebsketten, eingesetzt werden.

## Patentansprüche

1. Weiche für eine Förderanlage, zum wahlweisen Ablenken von Fördergütern, beispielsweise Behältern, von einer Förderbahn (1; 55) zu zumindest einer anderen Förderbahn (5; 5'; 1), mit in U-förmigen Bügeln (11) um eine horizontale Achse drehbar gelagerten Rollen (7; 7'), von denen zumindest einige angetrieben sind, wobei die Rollen (7; 7') mit den U-förmigen Bügeln (11) um eine vertikale Achse schwenkbar gelagert und mit einem Verschwenkantrieb (32; 44; 47) gekoppelt sind sowie durch Ausnehmungen (40) von Abdeckscheiben (38; 38') ragen, die zentrisch bezüglich der vertikalen Schwenkachse der Rollen (7) sowie zusammen mit diesen verschwenkbar angebracht sind, und mit zumindest einer sich allgemein über den übrigen Bereich der Weiche (3) erstreckenden Abdeckplatte (34; 34'), die zu den Abdeckscheiben (38; 38') passende Ausnehmungen (37) aufweist, dadurch gekennzeichnet, dass die Abdeckscheiben (38; 38') an den, vorzugsweise nach außen abgewinkelten, oberen Enden (13) der Schenkel (12) der U-förmigen Bügel (11) befestigt sind, dass an der Unterseite der Basis (14) des jeweiligen U-förmigen Bügels (11) zentrisch eine Lagerbuchse (15) angebracht ist, die auf einem, an einem Querträger (17) des Rahmens (23) der Weiche (3) befestigten Lagerzapfen (16) aufgesteckt ist, und dass zur gruppenweisen Verschwenkung der Rollen (7; 7') um die Achse ihrer Lagerzapfen (16) eine Schubstange (30; 45; 48) vorgesehen ist, die jeweils über einen in ein Langloch (28) eingreifenden Stift (29) an der Basis (14) des U-förmigen Bügels (11) angreift.

2. Weiche nach Anspruch 1, dadurch gekennzeichnet, dass die Basis (11) des U-förmigen Bügels (11) das seitlich außen liegende Langloch (28) aufweist, in welches der Stift (29) eingreift, der an der Schubstange (30; 45; 48) befestigt ist.

3. Weiche nach Anspruch 1 oder 2, dadurch gekennzeichnet, dass die Ausnehmungen (40) in den Abdeckscheiben (38; 38') wie an sich bekannt allgemein rechteckförmig sind, und dass die Ausnehmungen (40) die Rollen (7) mit geringem Spiel z.B. mit einem Spalt von 0,5 mm bis 4 mm, vorzugsweise ca. 1 mm, aufnehmen.

4. Weiche nach einem der Ansprüche 1 bis 3, dadurch gekennzeichnet, daß die Abdeckscheiben (38) mit einem axialen Spiel, z.B. von 0,5 mm bis 4 mm, vorzugsweise ca. 1 mm, unterhalb der Ausnehmungen (37) der Abdeckplatte (34) angeordnet sind.

5. Weiche nach Anspruch 4, dadurch gekennzeichnet, daß der Durchmesser der kreisförmigen Abdeckscheiben (38) etwas größer als der Durchmesser der kreisförmigen Ausnehmungen (37) ist.

6. Weiche nach einem der Ansprüche 1 bis 3, dadurch gekennzeichnet, daß die Oberseiten der Abdeckscheiben (38') und der Abdeckplatte (34) in gleicher Höhe verlaufen.

7. Weiche nach Anspruch 6, dadurch gekennzeichnet, daß die Abdeckscheiben (38') mit einem radialen Spiel von 0,5 mm bis 4 mm, vorzugsweise ca.1 mm, in die kreisförmig ausgebildete Ausnehmung (37') der Abdeckplatte (34) eingesetzt sind.

8. Weiche nach einem der Ansprüche 1 bis 7, dadurch gekennzeichnet, daß der Schubstange (30; 45; 48) als Antrieb ein pneumatischer Zylinder (32; 44; 47) zugeordnet ist.

9. Weiche nach einem der Ansprüche 1 bis 8, dadurch gekennzeichnet, daß die Abdeckplatte (34; 34') mittels Schnappverbindungen, beispielsweise in Form von Kugelschnappern (36a), am Rahmen (23; 23') der Weiche (3) fixierbar bzw. fixiert ist.

10. Weiche nach einem der Ansprüche 1 bis 9, dadurch gekennzeichnet, daß der Rahmen (23; 23') der Weiche (3) durch U-förmige Querträger (17; 17') mit jeweils zwei an deren Enden übereinanderliegend angeordneten C-förmigen Profilschienen (20, 21) gebildet ist und die Lager (10) für die Rollen (7; 7') an den Querträgern (17; 17') befestigt sind.

11. Weiche nach einem der Ansprüche 1 bis 10, dadurch gekennzeichnet, daß die Rollen (7; 7') eine mittige Umfangsnut (25) aufweisen, in welche ein Antriebsriemen (26) eingreift, der um eine unterhalb der Rollen (7; 7') gelagerte Antriebsrolle (24) geführt ist.

12. Weiche nach Anspruch 11, dadurch gekennzeichnet, daß jede Antriebsrolle (24) sowie gegebenenfalls im Abschnitt der Weiche (3) liegende Tragrollen (2a - 2d; 2') von einem gemeinsamen Antriebsriemen (27) angetrieben sind.

13. Weiche nach einem der Ansprüche 1 bis 12, dadurch gekennzeichnet, daß die Rollen (7; 7') beidseits der mittigen Umfangsnut (25) mit weiteren Umfangsnuten (41) zur Aufnahme von O-Ringen (42) aus Gummi versehen sind.

14. Weiche nach einem der Ansprüche 1 bis 13, dadurch gekennzeichnet, daß sich die Abdeckplatte (34') über einen Abschnitt einer weiteren parallel zur Förderbahn (1) liegenden ableitenden Förderbahn (5') erstreckt, und die beispielsweise in Paaren (4a - 4d) angeordneten, Rollen (7, 7') in Richtung zur ableitenden Förderbahn (5') versetzt angeordnet sind.

15. Weiche nach Anspruch 14, dadurch gekennzeichnet, daß die vorderen Rollen (7) verschwenkbar und die hinteren Rollen (7) fix einstellbar sind.

16. Weiche nach Anspruch 14, dadurch gekennzeichnet, daß sich die Abdeckplatte (34') über einen Abschnitt einer weiteren, zur Förderbahn (1) parallelen zubringenden Förderbahn (45) erstreckt, die sich zur ableitenden Förderbahn (5') fortsetzt, wobei weitere versetzt angeordnete Rollen (7, 7') angeordnet sind, die verschwenkbar sind.

17. Weiche nach Anspruch 16, dadurch gekennzeichnet, daß die letzten einander parallelgeschalteten Rollen (4g, 4'g) fix einstellbar sind.

## Claims

1. A shunt for a conveyor arrangement, for selectively diverting conveyed articles, e.g. containers, from one conveyor (1; 55) to at least one other conveyor (5; 5', 1), and comprising rollers (7; 7') mounted in U-shaped bows (11) to be rotatable about a horizontal axis, at least some of the rollers being driven, the rollers (7; 7') with the U-shaped bows (11) being mounted to be pivotable about a vertical axis and being coupled with a pivoting drive (32; 44; 47) and projecting through recesses (40) of cover disks (38; 38') which are arranged to be centric relative to the vertical pivot axis of the rollers (7) as well as to be pivotable together therewith, and comprising at least one cover plate (34; 34') generally extending over the remaining region of the shunt (3) which has recesses (37) matching the cover disks (38; 38'), characterized in that the cover disks (38; 38') are fastened to the, preferably outwardly angled, upper ends (13) of the legs (12) of the U-shaped bows (11), that a bearing bushing (15) is centrally arranged on the lower side of the base (14) of the respective U-shaped bow (11), which bearing bushing is slipped onto a bearing pin (16) fastened to a cross member (17) of the frame (23) of the shunt (3), and that for pivoting the rollers (7; 7') in groups about the axes of their bearing pins (16), a connecting rod (30; 45; 48) is provided which engages on the base (14) of the U-shaped bow (11) via a pin (29) engaging in a long hole (28).

2. A shunt according to claim 1, characterized in that the base (14) of the U-shaped bow (11) has the lateral outwardly located long hole (28) in which the pin (29) engages which is fastened to the connecting rod (30; 45; 48).

3. A shunt according to claim 1 or 2, characterized in that the recesses (40) in the cover disks (38; 38') are generally rectangular as known *per se* and that the recesses (40) receive the rollers (7) with a slight play, e.g. with a gap of from 0.5 mm to 4 mm, preferably approximately 1 mm.

4. A shunt according to any one of claims 1 to 3, characterized in that the cover disks (38) are arranged with an axial play, e.g. of from 0.5 mm to 4 mm, preferably approximately 1 mm, below the recesses (37) of the cover plate (34).

5. A shunt according to claim 4, characterized in that the diameter of the circular cover disks (38) is somewhat larger than the diameter of the circular recesses (37).

6. A shunt according to any one of claims 1 to 3, characterized in that the upper sides of the cover disks (38') and of the cover plate (34) extend at the same level.

7. A shunt according to claim 6, characterized in that the cover disks (38') are inserted in the circular recesses (37') of the cover plate (34) with a radial play of from 0.5 mm to 4 mm, preferably approximately 1 mm.

8. A shunt according to any one of claims 1 to 7, characterized in that a pneumatic cylinder (32; 44; 47) is associated with the connecting rod (30; 45; 48) as a drive.

9. A shunt according to any one of claims 1 to 8, characterized in that the cover plate (34; 34') is fixable, or fixed, respectively, on the frame (23; 23') of the shunt (3) by means of snap connections, e.g. in the form of ball catches (36a).

10. A shunt according to any one of claims 1 to 9, characterized in that the frame (23; 23') of the shunt (3) is formed by U-shaped cross members (17; 17') each having two superimposed C-shaped section rails (20, 21) at their ends, and the bearings (10) for the rollers (7; 7') are fastened to the cross members (17; 17').

11. A shunt according to any one of claims 1 to 10, characterized in that the rollers (7; 7') have a central peripheral groove (25) in which a driving belt (26) engages which is guided around a drive roller (24) mounted below the rollers (7; 7').

12. A shunt according to claim 11, characterized in that each drive roller (24) as well as carrying rollers (2a - 2d; 2') optionally located in the section of the shunt (3) are driven by a common driving belt (27).

13. A shunt according to any one of claims 1 to 12, characterized in that the rollers (7; 7') on both sides of the central peripheral groove (25) are provided with further peripheral grooves (41) to receive O-rings (42) of rubber.

14. A shunt according to any one of claims 1 to 13, characterized in that the cover plate (34') extends over a section of a further removing conveyor (5') extending in parallel to the conveyor (1), and that the rollers (7, 7') arranged, e.g., in pairs (4a - 4d) are arranged offset in the direction of the removing conveyor (5').

15. A shunt according to claim 14, characterized in that the forward rollers (7) are pivotable and the rearward rollers (7) are fixedly adjustable.

16. A shunt according to claim 14, characterized in that the cover plate (34') extends over a section of a further feeding conveyor (55) extending in parallel to the conveyor (1), which further feeding conveyor continues towards the removing conveyor (5'), further rollers (7, 7') in offset arrangement being provided which are pivotable.

17. A shunt according to claim 16, characterized in that the last rollers extending in parallel (4g, 4'g) are fixedly adjustable.

## Revendications

1. Aiguillage pour une installation de convoyage, pour faire dévier au choix des produits convoyés, par exemple des récipients, depuis une voie de convoyage (1; 55) en direction d'au moins une autre voie de convoyage (5;5';1), comportant des rouleaux (7;7') montés dans des étriers en forme de U (11) de manière à pouvoir tourner autour d'un axe horizontal et dont au moins quelques-uns sont entraînés, les rouleaux (7;7') étant montés de manière à pouvoir pivoter, conjointement avec les étriers en forme de U (11), autour d'un axe vertical et étant couplés à un dispositif d'entraînement de pivotement (32;44;47) et faisant saillie dans des évidements (40) de disques de recouvrement (38;38'), qui sont montés d'une manière centrée par rapport à l'axe vertical de pivotement des rouleaux (7) et peuvent pivoter conjointement avec ces derniers, et comportant au moins une plaque de recouvrement (34;34'), qui s'étend d'une manière générale sur le reste de la zone de l'aiguillage (3) et comporte des évidements (37), qui sont adaptés aux disques de recouvrement (38;38'), caractérisé en ce que les disques de recouvrement (38;38') sont fixés sur les extrémités supérieures (13), qui sont coudées de préférence vers l'extérieur, des branches (12) des étriers en forme de U (11), que sur la face inférieure de la base (14) de l'étrier respectif en forme de U (11) est monté d'une manière centrée un coussinet de palier (15), qui est emmanché sur un tourillon (16) fixé sur un support transversal (17) du châssis (23) de l'aiguillage (3), et que pour le pivotement par groupes des rouleaux (7;7') autour des axes de leurs tourillons (16), il est prévu un poussoir (30;45;48), qui attaque la base (14) de l'étrier en forme de U (11), par l'intermédiaire d'une tige (29) qui s'engage dans un trou allongé (28).

2. Aiguillage selon la revendication 1, caractérisé en ce que la base (14) de l'étrier en forme de U (11) comporte le trou allongé (28) situé latéralement à l'extérieur et dans lequel s'engage la tige (29) qui est fixée au poussoir (30;45;48).

3. Aiguillage selon la revendication 1 ou 2, caractérisé en ce que les évidements (40) formés dans des disques de recouvrement (38;38') ont, comme cela est connu, d'une manière générale une forme rectangulaire, et que les évidements (40) logent des rouleaux (7) avec un faible jeu, par exemple avec une fente de 0,5 mm à 4 mm, de préférence environ 1 mm.

4. Aiguillage selon l'une des revendications 1 à 3, caractérisé en ce que les disques de recouvrement (38) sont disposés avec un jeu axial par exemple compris entre 0,5 mm et 4 mm et égal de préférence environ 1 mm, au-dessous des évidements (37) de la plaque de recouvrement (34).

5. Aiguillage selon la revendication 4, caractérisé en ce que le diamètre des disques de recouvrement (38) de forme circulaire est légèrement supérieur au diamètre des évidements de forme circulaire (37).

6. Aiguillage selon l'une des revendications 1 à 3, caractérisé en ce que les faces supérieures des disques de recouvrement (38') et de la plaque de recouvrement (34) s'étendent à une même hauteur.

7. Aiguillage selon la revendication 6, caractérisé en ce que les disques de recouvrement (38') sont insérés avec un jeu radial compris entre 0,5 mm et 4 mm et de préférence égal à environ 1 mm, dans l'évidement de forme circulaire (37') de la plaque de recouvrement (34).

8. Aiguillage selon l'une des revendications 1 à 7, caractérisé en ce qu'un vérin pneumatique (32;44;47) est associé, en tant que dispositif d'entraînement, au poussoir (30;45;48).

9. Aiguillage selon l'une des revendications 1 à 8, caractérisé en ce que la plaque de recouvrement (34;34') peut être fixée ou est fixée au moyen de liaisons à encliquetage, par exemple sous la forme d'organes d'encliquetage à bille (36a), sur le châssis (23,23') de l'aiguillage (3).

10. Aiguillage selon l'une des revendications 1 à 9, caractérisé en ce que le cadre (23;23') de l'aiguillage (3) est formé par des supports transversaux en forme de U (17;17') comportant chacun deux rails profilés en forme de C (20,21) qui sont superposés au niveau de leurs extrémités, et que les paliers (10) pour les rouleaux (7;7') sont fixés sur les supports transversaux (17;17').

11. Aiguillage selon l'une des revendications 1 à 10, caractérisé en ce que les rouleaux (7;7') comportent une gorge circonférentielle médiane (25), dans laquelle s'engage une courroie d'entraînement (26), qui est guidée autour d'un rouleau d'entraînement (24) monté au-dessous des rouleaux (7;7').

12. Aiguillage selon la revendication 11, caractérisé en ce que chaque rouleau d'entraînement (24) ainsi que des rouleaux de support (2a-2d;2') situés éventuellement dans la section de l'aiguillage (3) sont entraînés par une courroie d'entraînement commune (27).

13. Aiguillage selon l'une des revendications 1 à 12, caractérisé en ce que les rouleaux (7;7') comportent, des deux côtés de la gorge circonférentielle médiane (25), d'autres gorges circonférentielles (41) servant à loger des joints toriques en caoutchouc (42).

14. Aiguillage selon l'une des revendications 1 à 13, caractérisé en ce que la plaque de recouvrement (34') s'étend sur une section d'une autre voie de convoyage de départ (5'), qui est parallèle à la voie de convoyage (1), et que les rouleaux (7,7'), qui sont installés par exemple par couples (4a,4d), sont disposés en étant décalés dans la direction de la voie de convoyage de départ (5').

15. Aiguillage selon la revendication 14, caractérisé en ce que les rouleaux avant (7) peuvent pivoter et que les rouleaux arrière (7) peuvent être réglés de façon fixe.

16. Aiguillage selon la revendication 14, caractérisé en ce que la plaque de recouvrement (34') s'étend, sur une section d'une autre voie d'amenée (45) parallèle à la voie de convoyage (1) et qui se prolonge par la voie de convoyage de départ (5'), et qu'il est prévu d'autres rouleaux (7,7') disposés de façon décalée et qui peuvent pivoter.

17. Aiguillage selon la revendication 16, caractérisé en ce que les derniers rouleaux (4g,4'g) montés en parallèle sont réglables de façon fixe.
